# FASCICULE DE BREVET EUROPEEN

(11) **EP 0 522 963 B1**
(45) Date de publication et mention de la délivrance du brevet: **29.05.1996**
(21) Numéro de dépôt: 92401972.2
(22) Date de dépôt: 09.07.1992
(51) Int. Cl.: C03B 35/18

(54) **Revêtement pour rouleaux de convoyeur**
Beschichtung für Transportrollen
Coating for conveyor rollers

(30) Priorité: 11.07.1991 FR 9108720
(43) Date de publication de la demande: 13.01.1993
(73) Titulaire: SAINT-GOBAIN VITRAGE, F-92400 Courbevoie (FR)
(72) Inventeur: Tinelli, Pascal, F-60200 Compiegne (FR); Lesage, Jean-Luc, F-60200 Compiegne (FR)
(74) Mandataire: Muller, René

(56) Documents cités:
- EP-A- 0 107 565
- EP-A- 0 389 317
- FR-E- 94 427
- GB-A- 2 134 218
- GB-A- 2 186 279
- US-A- 3 807 013
- US-A- 3 815 197
- US-A- 3 852 862
- DATABASE WPIL Section Ch, Week 38, Derwent Publications Ltd., London, GB; Class L, AN 86-248250 & JP-A-61 175 311 (KUBOTA KK) 7 Aout 1986 * abrégé; figures 1,2 *

## Description

L'invention a trait aux techniques de bombage et/ou de traitement thermique de feuilles de verre. Elle a pour objet un revêtement pour équiper des rouleaux de convoyeur transportant les feuilles de verre au travers d'un four horizontal destiné à leur faire acquérir la température nécessaire à leur bombage et/ou traitement thermique ultérieur.

Elle concerne plus particulièrement l'utilisation de revêtements pour les rouleaux situés dans les zones de repositionnement des feuilles par rapport à leur axe de défilement.

En effet, pour produire des feuilles de verre bombées présentant une bonne conformité de galbe et une qualité optique satisfaisante, il importe notamment que la feuille de verre soit correctement positionnée avant d'être prise en charge par les outillages de bombage et/ou traitement thermique. C'est pourquoi on procède usuellement à des réajustements d'orientation de la feuille de verre à l'intérieur du four dans le plan des rouleaux du convoyeur, frontalement, c'est-à-dire en agissant sur le bord "avant" de la feuille par rapport à son axe de défilement, et/ou latéralement, c'est-à-dire en intervenant sur l'un ou l'autre des bords sensiblement parallèles audit axe. Plus ce réajustement s'effectue à proximité de la fin du four, plus il se révèle efficace puisqu'il diminue d'autant le risque de voir les feuilles se désorienter de nouveau avant d'être prises en charge à la sortie du four. Par contre, un tel réajustement "tardif" augmente sensiblement les risques de marquage des feuilles alors très proches de leur température de ramollissement finale, puisqu'il implique à la fois un contact direct entre des organes de repositionnement et un ou plusieurs bords des feuilles et un frottement entre la surface inférieure des feuilles et les rouleaux du convoyeur.

On peut distinguer deux types d'organes de repositionnement : les organes du type "statique" et ceux du type " dynamique ".

Tout d'abord, il est connu notamment du brevet EP-A-389 317 un dispositif que l'on pourrait qualifier de "statique", comportant des butées frontales, par exemple au nombre de deux, et interposées sur le chemin des feuilles de verre dans le four, qui, successivement heurtées par le bord avant de chacune d'entre elles, s'escamotent dès qu'est détecté le double contact entre la feuille et les deux butées. Ainsi, on réduit le temps de repositionnement au temps juste nécessaire, afin de limiter le temps de frottement verre/rouleaux. Cependant, en stoppant la feuille, ce type de dispositif statique induit malgré cela des frottements qui, s'ils sont acceptables jusqu'au milieu du four, soit à une température du verre inférieure à 500 voire 550°C, engendreraient des marques sur la surface inférieure des feuilles au-delà.

C'est pourquoi, il a été également proposé un autre type d'organes de repositionnement, que l'on peut qualifier, par opposition au précédent, de "dynamique", dans la mesure où ils sont animés d'un mouvement et accompagnent chaque feuille sur une certaine distance tout en la réorientant. On peut citer le dispositif de recentrage frontal du brevet EP-A-389 316 ou le dispositif de recentrage latéral du brevet EP-A-367 670. Ceci permet à la fois de soutenir des cadences de production élevées, mais aussi de diminuer sensiblement l'intensité du frottement verre/ rouleaux, la différence de vitesse lors du repositionnement entre les feuilles et les rouleaux, quant à eux animés d'une vitesse de rotation constante, étant bien moindre. C'est pourquoi ce type de dispositif dynamique reste de ce fait utilisable même en fin de four. Cependant, s'il est performant, il se révèle aussi relativement coûteux et d'une mise en oeuvre complexe, ne serait-ce que parce qu'il nécessite une détection des feuilles en amont de celui-ci, une bonne synchronisation entre le mouvement des feuilles successives et celui des organes de repositionnement, et un réglage systématique entre chaque série de production de feuilles de verre bombées. Son utilisation implique en outre l'obligation de réserver dans le four une zone autorisant le mouvement de ce type d'organe mobile, et de pratiquer dans celui-ci des ouvertures peu propices à la régulation en température de l'enceinte du four.

Le but de l'invention consiste alors à chercher comment il serait possible d'utiliser des dispositifs de repositionnement du type statique, beaucoup plus simples de mise en oeuvre que ceux du type dynamique, tout au long du four, et néanmoins sans provoquer de marquage sur les feuilles de verre altérant leur qualité optique.

Les auteurs de l'invention ont bien constaté que tout repositionnement frontal stoppe, ou à tout le moins freine dans son élan, la feuille de verre, alors que les rouleaux continuent à tourner de manière uniforme tandis que tout repositionnement latéral la fait à tout le moins déraper sur les rouleaux par rapport à son axe de défilement. Tous ces frottements sont d'autant plus intensifs, comme on l'a mentionné précédemment, que l'on a affaire à des dispositifs statiques et que l'on se situe près de la sortie du four.

Jusqu'à présent, un moyen usuel pour minimiser ces frottements consistait à habiller les rouleaux situés dans la zone de repositionnement de gaines en fils de silice tressés. Cependant, leur utilisation ne donne pas entière satisfaction sur plusieurs points. Tout d'abord, ces fils de silice s'oxydent assez vite à haute température, même disposés qu'en début ou milieu de four. En outre, ces gaines présentent une résistance mécanique médiocre, ce qui entraîne fréquemment des ruptures locales de quelques fils se propageant très vite sur toute la longueur de la gaine, laissant reposer localement la feuille de verre sur un rouleau nu. Ces deux faiblesses obligent à remplacer les gaines très fréquemment, d'autant plus que leur texture tressée, qui s'apparente à un tissu, offre une surface certes bien lisse mais présentant par contre un "moelleux" dans son épaisseur plutôt limité. Le contact verre/silice ne se fait donc pas de manière optimale.

Les auteurs de l'invention ont proposé un autre type de revêtement de rouleau, qui permet de réduire suffisamment l'intensité des frottements verre/rouleaux, en particulier dans les zones de repositionnement utilisant des dispositifs de type statique, pour pouvoir utiliser ceux-ci en fin de four, en obviant aux inconvénients du revêtement en silice ci-dessus mentionné.

Il s'agit d'un revêtement tubulaire pour rouleaux de convoyeur de feuilles de verre amenées à leur température de ramollissement dans un four de bombage et/ou de traitement thermique qui présente la particularité d'avoir une surface extérieure, celle en contact avec les feuilles de verre, à base de fils métalliques. Il peut aussi par exemple être constitué à partir de fils métalliques sur toute son épaisseur, et notamment être entièrement métallique.

L'invention a ainsi tout d'abord pour objet un revêtement tubulaire pour rouleaux de convoyeur sur lesquels défilent les feuilles de verre dans un four de bombage et/ou de traitement thermique destiné à les amener à leur température de ramollissement. Il se caractérise par sa surface extérieure qui se trouve en contact avec lesdites feuilles. Cette surface est à base de fils en alliage métallique, tel que l'acier inoxydable, alliage à base de nickel-chrome ou de fer-chrome-nickel, et qui sont tricotés ou tressés et constitués de fibres retordues elles-mêmes faites à partir de filaments de diamètre moyen compris entre 7 et 12 microns. Le revêtement est ainsi apte à équiper les rouleaux situés dans les zones de repositionnement frontal et/ou latéral des feuilles de verre dans le plan du convoyeur par rapport à leur axe de défilement.

L'invention a également pour objet un revêtement tubulaire pour rouleaux de convoyeur sur lesquels défilent les feuilles de verre dans un four de bombage et/ou de traitement thermique destiné à les amener à leur température de ramollissement, revêtement qui est constitué à base de fils en alliage métallique tel que l'acier inoxydable, un alliage à base de nickel-chrome ou de fer-chrome-nickel, et qui sont tressés ou tricotés et constitués de fibres retordues, elles-mêmes faites à partir de filaments de diamètre moyen compris entre 7 et 12 micromètres.

On l'utilisera de préférence dans le cadre de l'invention pour équiper les rouleaux présents dans les zones de repositionnement frontal et/ou latéral des feuilles de verre dans le plan du convoyeur par rapport à leur axe de défilement.

L'invention concerne également l'association d'un ensemble de rouleaux convoyeurs dans le four équipés d'un tel revêtement, et d'organes de repositionnement.

Le contact entre verre et métal induit en effet un coefficient de frottement sensiblement moins élevé qu'un contact verre/silice, ce qui engendre une diminution notable des risques de marquage des surfaces inférieures des feuilles lors de leur repositionnement.

On choisit, de préférence, un revêtement à base de fils métalliques, comme en acier inoxydable, en alliage nickel-chrome ou fer-chrome-nickel, ce revêtement présentant alors une tenue à haute température et une résistance mécanique sans commune mesure avec celles d'un revêtement en silice. Il n'y a pas de phénomène de rupture brusque de fils, l'usure est donc très ralentie et beaucoup plus progressive, ce qui permet des changements de revêtements à une cadence bien plus faible.

La texture du revêtement métallique est soit tressée, soit tricotée. On préfère cependant le tricot, qui, par sa souplesse et son moelleux, favorise un contact doux avec le verre, ce qui contribue à réduire tout risque de marquage.

En outre, l'extensibilité dudit tricot tubulaire, notamment selon les axes perpendiculaires à l'axe du cylindre que constitue le revêtement, lui permet de s'adapter à différents diamètres de rouleaux.

Les caractéristiques et avantages de l'invention apparaîtront dans la description détaillée suivants d'exemples non limitatifs.

On rappelle que pour caractériser un fil apte à être tressé ou tricoté, on utilise le numéro métrique, unité qui indique le nombre de mètres linéaires obtenu pour un gramme de matière. Dans le cadre de l'invention, le numéro métrique des fils utilisés sera de préférence compris entre 5 et 50.

Un revêtement tubulaire, dans le cas d'un tricot, se fabrique sur un métier cylindrique, présentant un certain nombre d'aiguilles par pouce : c'est la jauge, qui permet d'évaluer la taille des mailles du tricot obtenu. Ici, elle est de préférence comprise entre 12 et 20. Le tricot présente les mailles relativement extensibles, du type cueilli notamment.

Les fils métalliques sont avantageusement constitués de fibres retordues, elles-mêmes composées de filaments unitaires de diamètre moyen compris entre 7 et 12 microns. Ces fils sont notamment en alliage essentiellement à base de nickel et chrome, comme l'alliage 316L norme AISI, ou en alliage fer-chrome-nickel, tel que l'acier inoxydable Inconel 601 selon le standard ASTM. Ce dernier, qui présente une tenue à haute température supérieure au précédent, sera préféré dans le cas où la zone de repositionnement des feuilles de verre se situe en fin de four, où la température des feuilles excède 650°C.

L'épaisseur du revêtement selon l'invention est de préférence de 1 à 2 mm.

Des exemples de revêtements de tricot métallique tubulaire particulièrement adaptés à l'application envisagée dans le cadre de l'invention sont commercialisés par la société Bekaert, sous la dénomination Bekitherm KN/T2/316L, fait à partir d'un alliage 316L, ainsi que, pour son homologue à partir d'Inconel 601, sous la dénomination Bekitherm KN/T2/INC.601. Ils présentent tous les deux une épaisseur nominale de 1,5 mm et un poids linéaire de fils, exprimé en gramme par mètre, de 135.

Leurs diamètres internes, lorsqu'ils ne sont pas sous tension, sont respectivement de 40 et 50 mm. Ils sont utilisables pour des rouleaux de convoyeur présentant respectivement des diamètres externes de 40 à 80 mm et de 50 à 90 mm.

Tous ces revêtements métalliques équipent donc le nombre de rouleaux suffisants pour assurer le contact avec la surface de la feuille de verre tout au long de son repositionnement. Ils permettent de réduire considérablement tout risque de marquage dû à l'inévitable frottement verre/rouleaux qu'implique un repositionnement de feuille, si perfectionné soit-il. Ils sont en plus très solides.

Leur présence est particulièrement avantageuse lorsqu'on utilise des organes de repositionnement du type statique, c'est-à-dire ceux qui sont le plus susceptibles de générer des marques sur les feuilles de verre, car elle permet d'employer ceux-ci même en fin de four grâce à la diminution de l'intensité des frottements procurée par une surface métallique, ce qui n'était pas envisageable jusque-là. On peut alors éviter de recourir aux dispositifs "dynamiques" plus complexes, lorsqu'ils ne sont pas indispensables.

Mais il va de soi que l'on peut avantageusement utiliser ce revêtement a fortiori dans le cas de dispositifs de repositionnement dynamiques.

On se rapportera notamment aux trois brevets précédemment cités pour plus de précision sur chacun de ces dispositifs, mais il est clair que le revêtement selon l'invention est indiqué pour toute zone de repositionnement dans le four, quel que soit l'organe de repositionnement, et en général pour toute zone où un marquage par contact avec les rouleaux est à craindre.

Avec la qualité de contact avec le verre et le moelleux qu'apporte un tel revêtement à surface extérieure en fils métalliques, celui-ci peut équiper les rouleaux disposés à n'importe quelle zone de transport des feuilles dans le four.

En outre, sa très grande solidité le rend utile pour revêtir des rouleaux dans les zones les plus sensibles à l'usure, par exemple en tête de four où les volumes de verre commencent, sous l'action du chauffage, à se déformer légèrement, prenant notamment une forme en "bâteau" dont les arêtes sollicitent durement le revêtement des rouleaux à cet emplacement.

## Revendications

1. Revêtement tubulaire pour rouleaux de convoyeur sur lesquels défilent les feuilles de verre dans un four de bombage et/ou de traitement thermique destiné à les amener à leur température de ramollissement, **caractérisé en ce que** sa surface extérieure en contact avec lesdites feuilles est à base de fils en alliage métallique, tel que l'acier inoxydable, alliages à base de nickel-chrome ou de fer-chrome-nickel, et qui sont tricotés ou tressés et constitués de fibres retordues, elles-mêmes faites à partir de filaments de diamètre moyen compris entre 7 et 12 microns, ainsi étant apte à équiper les rouleaux situés dans les zones de repositionnement frontal et/ou latéral des feuilles de verre dans le plan du convoyeur par rapport à leur axe de défilement.

2. Revêtement selon la revendication 1, **caractérisé en ce qu'**il est constitué d'un tricot à mailles cueillies à caractère extensible et présentant une jauge comprise entre 12 et 20.

3. Revêtement selon l'une des revendications 1 ou 2, **caractérisé en ce que** son épaisseur est comprise entre 1 et 2 mm.

4. Ensemble de rouleaux de convoyeur sur lesquels défilent les feuilles de verre dans un four de bombage et/ou de traitement thermique destiné à les amener à leur température de ramollissement, lesdits rouleaux étant équipés de revêtements tubulaires conformes à l'une des revendications précédentes et associés à des organes de repositionnement des feuilles de verre.

5. Utilisation du revêtement conforme à l'une des revendications 1 à 3, pour recouvrir les rouleaux situés dans les zones de repositionnement de feuilles de verre dans le plan de leur convoyeur par rapport à leur axe de défilement à l'intérieur d'un four de bombage et/ou de traitement thermique.

6. Revêtement tubulaire pour rouleaux de convoyeur sur lesquels défilent les feuilles de verre dans un four de bombage et/ou de traitement thermique destiné à les amener à leur température de ramollissement, **caractérisé en ce qu'**il est constitué à base de fils en alliage métallique tel que l'acier inoxydable, un alliage à base de nickel-chrome ou de fer-chrome-nickel, et qui sont tressés ou tricotés et constitués de fibres retordues, elles-mêmes faites à partir de filaments de diamètre moyen compris entre 7 et 12 micromètres.

## Claims

1. Tubular covering for conveyor rollers on which travel glass sheets into a bending and/or heat treatment furnace for bringing them to their softening point, characterized in that its outer surface in contact with said sheets is based on metal alloy wires, such as stainless steel, alloys based on nicket and chromium or iron-nickel-chromium, which are braided or knitted and constituted by twisted fibres, which are themselves formed from filaments having a mean diameter between 7 and 12 microns, thus being able to equip the rollers located in the frontal and/or lateral repositioning zones of the glass sheets in the plane of the conveyor relative to their travel axis.

2. Covering according to claim 1, characterized in that it is constituted by a knitted fabric having gathered meshes with an extensible character and having a mesh size between 12 and 20.

3. Covering according to one of the claims 1 or 2, characterized in that its thickness is between 1 and 2 mm.

4. Group of conveyor rollers on which the glass sheets travel into a bending and/or heat treatment furnace for bringing them to their softening point, said rollers being equipped with tubular coverings according to any one of the preceding claims and associated with glass sheet re-positioning members.

5. Use of the covering according to any one of the claims 1 to 3 for covering the rollers located in the glass sheet repositioning zones in the plane of their conveyor relative to their travel axis within a bending and/or heat treatment furnace.

6. Tubular covering for conveyor rollers on which travel glass sheets into a bending and/or heat treatment furnace for bringing them to their softening point, characterized in that it is based on wires of metal alloy such as stainless steel, an alloy based on nickel-chromium or iron-chromium-nickel and which are braided or knitted and constituted by twisted fibres, themselves formed from filaments with a mean diameter of 7 to 12 micrometres.

## Patentansprüche

1. Röhrenförmiger Überzug für Fördererrollen, auf denen Glasscheiben in einem Biege- und/oder thermischen Behandlungsofen durchlaufen, der vorgesehen ist, diese auf ihre Erweichungstemperatur zu bringen, **dadurch gekennzeichnet, daß** die in Berührung mit den Glasscheiben befindliche Außenoberfläche Drähte aus einer Metallegierung wie nichtrostendem Stahl und aus Legierungen auf Chromnickel- oder Eisenchromnickelbasis zur Grundlage hat, die gestrickt oder geflochten sind und aus verzwirnten Fasern bestehen, die ihrerseits aus Filamenten mit einem mittleren Durchmesser von 7 bis 12 Mikrometern hergestellt sind, so daß mit ihm die Rollen ausgerüstet werden können, die sich in der Zone für die vordere und/oder die seitliche Positionierung der Glasscheiben in bezug auf deren Durchlaufachse in der Fördererebene befinden.

2. Überzug nach Anspruch 1, **dadurch gekennzeichnet, daß** er aus einem Gestrick aus Kuliermaschen mit Dehnungseigenschaften besteht, das ein Gauge von 12 bis 20 aufweist.

3. Überzug nach Anspruch 1 oder 2, **dadurch gekennzeichnet, daß** seine Dicke 1 bis 2 mm beträgt.

4. Einheit aus Fördererrollen, auf denen Glasscheiben in einem Biege- und/oder thermischen Behandlungsofen durchlaufen, der vorgesehen ist, diese auf ihre Erweichungstemperatur zu bringen, wobei die Rollen mit röhrenförmigen Überzügen nach einem der vorhergehenden Ansprüche ausgerüstet und mit Positionierorganen für die Glasscheiben verbunden sind.

5. Verwendung des Überzugs nach einem der Ansprüche 1 bis 3 zum Beschichten der Rollen, die sich in den Zonen für die Positionierung der Glasscheiben in bezug auf deren Durchlaufachse in der Fördererebene im Inneren eines Biege- und/oder thermischen Behandlungsofens befinden.

6. Röhrenförmiger Überzug für Fördererrollen, auf denen Glasscheiben in einem Biege- und/oder thermischen Behandlungsofen durchlaufen, der vorgesehen ist, diese auf ihre Erweichungstemperatur zu bringen, **dadurch gekennzeichnet, daß** er auf der Grundlage von Drähten aus einer Metallegierung wie nichtrostendem Stahl und aus einer Legierung auf Chromnickel- oder Eisenchromnickelbasis aufgebaut ist, die gestrickt oder geflochten sind und aus verzwirnten Fasern bestehen, die ihrerseits aus Filamenten mit einem mittleren Durchmesser von 7 bis 12 Mikrometern hergestellt sind.
